# EUROPEAN PATENT APPLICATION

(11) **EP 1 892 882 A1**
(43) Date of publication of application: **27.02.2008**
(21) Application number: 06291367.8
(22) Date of filing: 25.08.2006
(51) Int. Cl.: H04L 12/24

(54) **Method of providing QoS for a flow**

(71) Applicant: Alcatel Lucent, 75008 Paris (FR)
(72) Inventor: Acke, Willem, 2820 Rijmenam (BE); Bouchat, Christele, 2060 Antwerpen (BE)
(74) Representative: Zinsinger, Norbert

(57) **Abstract**

The invention concerns a method of providing QoS for a flow associated with a client application in a network (1), and a QoS manager (12) to execute this method. The network comprises said QoS manager (12), a QoS policy holder (13), one or more QoS devices (14, 15, 16), and a control point (11) associated with the client application. Moreover, the network (1) supports a Universal Plug and Play QoS service. The QoS manager (12) calculates a topology of the network (1) on flow setup and requests traffic policy data from the QoS policy holder (13). The QoS manager (12) submits traffic descriptor data based on said traffic policy data to the one or more QoS devices (14,15,16) for configurating said QoS devices (14, 15, 16) for handling the flow, The QoS manager (12) subscribes to events of the one or more QoS devices (14, 15, 16). The control point (11) subscribes to events of the QoS manager (12). On detection of a QoS device event by the QoS manager (12), the topology of the network (1) is re-calculates by the QoS manager (12) for determining a topology change. The QoS manager (12) checks whether the topology change affects the flow. If the flow is affected by the topology change, the QoS manager (12) triggers suitable measures.

## Description

The present invention relates to a method of providing QoS for a flow, and a QoS manager to execute said method.

Universal Plug and Play (= UPnP) Quality of Service (= QoS) provides a signaling framework to set up a QoS-enabled flow in a home LAN (= Local Area Network). Within the UPnP QoS architecture, there are three main elements: the QoS policy holder, the QoS manager and the QoS devices,

According to the UPnP QoS standard issued by the UPnP Forum, a QoS manager entity is responsible to setup QoS for a flow on all UPnP QoS enabled devices in a path taken by the flow. The QoS manager function is a combination of QoS manager service and a control point functionality that discovers and controls QoS device and QoS policy holder services running on the network. The QoS manager function is responsible for requesting, updating, releasing and in general controlling the Quality of Service assigned by networking devices to various traffic streams, The QoS manager service will be invoked from a UPnP control point to perform the functions related to setting up Quality of Service for that traffic. Once the network is configured with respect to the Quality of Service for the upcoming traffic stream, the QoS manager service will hand back control to the control point.

It is the object of the present invention to provide an enhanced UPnP Quality of Service.

The object of the present invention is achieved by a method of providing QoS for a flow associated with a client application in a network comprising a QoS manager, a QoS policy holder, one or more QoS devices, and a control point associated with the client application, wherein the network supports a Universal Plug and Play QoS service, whereby the method comprises the steps of calculating, by the QoS manager, a topology of the network on flow setup and requesting, by the QoS manager, traffic policy data from the QoS policy holder, submitting, by the QoS manager, traffic descriptor data based on said traffic policy data to the one or more QoS devices for configurating said QoS devices for handling the flow, subscribing by the QoS manager to events of the one or more QoS devices, subscribing by the control point to events of the QoS manager, on detection of a QoS device event by the QoS manager, recalculating the topology of the network by the QoS manager for determining a topology change, checking, by the QoS manager, whether the topology change affects the flow, if the flow is affected by the topology change, triggering suitable measures by the QoS manager, Moroever, the object of the present invention is further achieved by a QoS manager supporting the provision of QoS for a flow associated with a client application in a network comprising the QoS manager, a QoS policy holder, one or more QoS devices, and a control point associated with the client application, wherein the network supports a Universal Plug and Play QoS service, whereby the QoS manager is adapted to calculate a topology of the network on flow setup and request traffic policy data from the QoS policy holder, submit traffic descriptor data based on said traffic policy data to the one or more QoS devices for configurating said QoS devices for handling the flow, subscribe to events of the one or more QoS devices, receive a subscription to events of the QoS manager from the control point, on detection of a QoS device event, re-calculate the topology of the network for determining a topology change, checking whether the topology change affects the flow, if the flow is affected by the topology change, indicating the event to the control point.

Contrary to the UPnP QoS standard which explicitly describes the GioS manager as a stateless device, the present invention proposes that the QoS manager becomes a stateful entity, keeping topology information, requested bandwidth and status per flow.

The fact that the QoS manager is a stateful entity avoids many problems which are encountered by state-of-the-art QoS managers. Currently it is very difficult for a client application, often associated with a control point, to act on topology changes in the home network. For example, when a user is subscribed to a triple play service, and watching a TV channel, it is necessary to wam the end-user when his channel is having quality problems due to a failure in a network device, or a network link, and not due to the operator so that the end-user will not phone the operator and increase its OPEX (= Operational Expenditure). By means of the stateful QoS manager introduced by this invention it becomes possible, and more efficient, to indicate to a client that a link in the home LAN has failed, and that his application might be affected.

Moreover, in the standard UPnP QoS version, client applications, often associated with control points, can only subscribe to topology change events (PathInformation) on QoS devices, and have to subscribe to all QoS devices to get all necessary topology information. When a topology change occurs, the client application has to check if it is affected by this change, by calculating the new topology. Since the client application has to subscribe to all QoS devices events, this solution is either not feasible or results in the client application receiving a lot of information, leading to a high load of processing. For example, adding a device to the network will already trigger an event. Besides, every UPnP QoS client application needs to have the same function, and does the same calculation for every topology change, leading to a lot of overlap of functionality.

These problems are avoided by the present invention where a great deal of functionality originally allocated to the client/control point has been shifted to the QoS manager which acquires information about the network. According to the present invention, the QoS manager - instead of the control point - will subscribe to QoS device events, to detect topology changes. On topology changes, the QoS manager can now quickly compare the new topology with the stored flows, to check if one of the applied flows, i.e., one of the flows managed by the QoS manager, is affected. If so, the QoS manager can try to solve the problem on his own, e.g., by reducing the allowed maximum bandwidth for a given application by selecting a different TSPEC from the application's TSPEC list (TSPEC = Traffic Specification). If this does not work, it will generate an event to the subscribed control points (client applications). The event message will contain a copy of a state variable, indicating affected streams, so that the control points can quickly check if they are affected or not, and take the appropriate action.

Similarly, according to the previous art, client applications could not react on changing bandwidth conditions in the network, since they only know about their own flow. With the present invention, in the case of bandwidth changes (detected through the UPnP QoS v2.0 RotaMeter function), the QoS manager can re-apply connection admission control functions, in order to adapt all flows to the new bandwidth situation. If the QoS manager has to release a flow for this, it will again send an event with the same state variable, to indicate the new status of the flows. The subscribed applications can then quickly check if they are affected, and take relevant action (warn the end-user, stop sending traffic, ...).

Therefore, thinner and less complex client applications are possible. The home network becomes more self-healing when bandwidth changes occur and the home network is less flooded with event messages.

Further advantages are achieved by the embodiments of the invention indicated by the dependent claims.

According to a preferred embodiment of the invention, the control point subscribes to events of the QoS manager. Thus, when the QoS manager detects a network change which is relevant for the control point, e.g., because the flow controlled by the control point is affected by a topology change, the QoS manager generates a corresponding notification and sends this notification to the subscribed control point. In other words, if the flow is affected by the topology change, the QoS manager generates an event to the control point.

All subscribers to an event are sent all event messages, subscribers receive event messages for all "evented" variables that have changed, and event messages are sent no matter why the state variable changed (either in response to a requested action or because the state the service is modeling changed).

According to another preferred embodiment of the invention, the QoS manager attempts without client interaction to counteract on a situation which negatively affects the flow, e.g., endangers a subscribed QoS of the flow, Preferably, the QoS manager is set up to take appropriate action without involvement of the client. The QoS manager, knowing the network from end-to-end, also "knows" which part of the network is affected by a topology change and can initiate well-directed actions. It may be only if the QoS manager is not authorized to take a specific action or the required resources are not available, that the QoS manager informs the client to take over the management to the client.

According to another preferred embodiment of the invention, the QoS manager adjusts the configuration of the QoS devices handling the flow traffic to a new network configuration resulting from a change of the network topology. The traffic descriptor is defined by the control oint, and fixed. It is possible that the control point specifies multiple traffic descriptors for the QoS manager to choose from. If the flow is affected by the topology change, the QoS manager chooses a traffic descriptor which best suits the current needs of the changed network configuration and transmits the chosen traffic descriptor to the affected network devices. Thus, the QoS manager re-arranges the settings of the network devices handling the flow through the network, preferably in a way that the flow can be kept up as good as possible.

In a preferred embodiment, the QoS manager adjusts the priority associated with the flow in a new network topology resulting from a change of the network topology if the flow is affected by the topology change. The QoS manager may change the priority that is assigned to the flow in the network, e.g., by adjusting a packet priority value used on a particular traffic stream. Particularly if the QoS manager manages several flows through the network in parallel, the QoS manager may re-arrange the priorities assigned to the flows in order to maintain an optimal result with regard to the entirety of flows.

According to another preferred embodiment of the invention, the QoS manager notifies, if the flow is affected by the topology change, the client application associated with the flow about the network and/or the flow. Preferably, this notification is provided as a copy of a state variable comprising information about the network and/or the flow.

Preferably, the QoS manager determines how bandwidth are allocated to flows with various QoS requirements if the flow is affected by bandwidth changes associated with the topology change. In this case, the QoS manager may re-apply connection admission control functions implemented between the network edges and the core network to control traffic entering the network. Further, the QoS manager may adapt the flow to the new bandwidth situation in the network.

Preferably, the QoS manager attempts to secure the maintenance of all flows managed by the QoS manager even if one or more of these flows are affected by reduced bandwidth resources due to the topology change. The rules that govern the approach followed by the QoS manager may have been predefined by a user. It is possible that the QoS manager tries to reduce the QoS of one or more flows from a subscribed level to a degraded level. It is also possible that the QoS manager, if the QoS subscribed for a flow cannot be maintained, releases the flow. In addition, the QoS manager may send a notification to the control point to inform the control point about the current state of the network and/or the new status of the flow. Preferably, this notification may comprise a copy of a state variable comprising information about the network and/or the new status of the flow.

According to another preferred embodiment, the QoS manager is a stateful entity which keeps topology information of the network and/or requested bandwidth information associated with the flow and/or a current status of the flow in a local state variable.

These as well as further features and advantages of the invention will be better appreciated by reading the following detailed description of presently preferred exemplary embodiments taken in conjunction with accompanying drawings of which:
- Fig. 1: is block diagram of a UPnP QoS network according to an embodiment of the invention.
- Fig. 2: is a sequence diagram of the processes in the UPnP QoS network according to an embodiment of the invention.
- Fig. 3: is a block diagram of a QoS manager according to an embodiment of the invention.

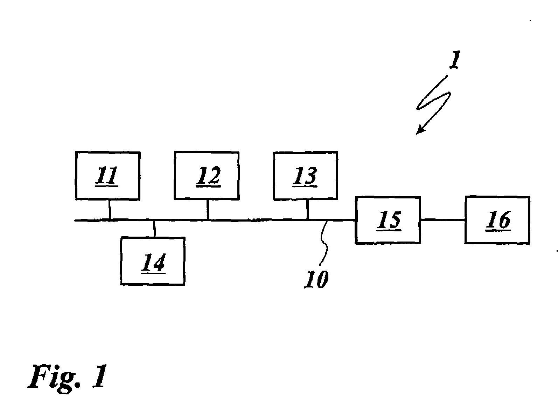

Fig. 1 shows a network 1 conforming to the UPnP QoS architecture, with a wireline/wireless user's home LAN circuit 10 running under an IP protocol and providing a connection between a control point 11, a QoS manager 12, a QoS policy holder 13, a source QoS device 14, an intermediate QoS device 15, and a sink QoS device 16 (IP = Internet Protocol).

The source QoS device 14 may be a DVD player comprising a DVD library unit, the sink QoS device 16 may be a set-top box with connected TV, and the intermediate QoS device 15 may be a routing gateway and providing a connection between the source QoS device 14 and the sink QoS device 16 (DVD = Digital Versatile Disk; TV = Television). The control point 11 may be located in a client application, e.g., a software program running on the user's laptop.

All QoS devices 14 to 16 are UPnP enabled devices, allowing the user to build a home network where the QoS devices 14 to 16 automatically locate and identify each other without any end-user configuration.

For example, the user sits at home on his couch, with his laptop on his lap, and works on a presentation for the next working day. After finishing, he wants to watch a movie on his TV 16 for recreation. As the laptop, as many other devices in the user's household, is UPnP enabled, the user uses his laptop to initiate the movie show. First, he starts a video control program on his laptop which provides a choice of movies available at the DVD library unit. From the presented choice, the user selects his favourite movie, e.g., by a mouse-click.

The UPnP QoS control point 11 is associated with said video control program. After the control point 11 discovers the source QoS device 14 and the sink QoS device 16, along with content TSPEC, it requests the QoS manager 12 in the network 1 to set up a QoS traffic stream for the transmission of a data flow associated with the chosen movie. In the present example, the traffic stream is a flow of AV data which are real-time and bandwidth intensive (AV = audiovisual). The control point 11 creates a traffic descriptor structure and passes it to the QoS manager 12. Thus, the QoS manager 12 receives information such as IP addresses of the source QoS device 14 and the sink QoS device 15 from the control point 11.

The QoS manager 12 determines the devices which are in the flow, i.e., the source QoS device 14, the intermediate QoS device 15, and the sink QoS device 16, and calculates a topology of the network 1. Then, the QoS manager 12, acting as a control point, requests the QoS policy holder 13 to provide appropriate policy for the traffic descriptor. The QoS policy holder 13 provides policy for the network 1 on which it resides. That is, the QoS policy holder 13 sets the relative importance of a particular traffic stream by returning a traffic policy, e.g., encoded in a traffic importance number, i.e., a priority, and a user importance number. Based on this policy, the QoS manager 12 configures the QoS devices 14 to 16 for handling the new traffic associated with the AV flow.

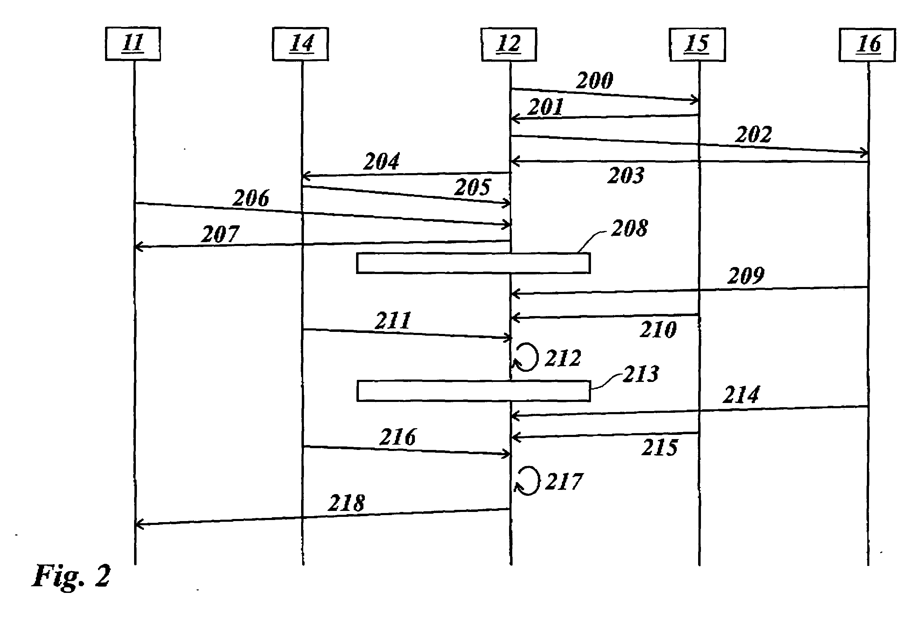

Fig. 2 shows a sequence diagram where the QoS manager 12 takes a central role in managing the QoS of the network 1, according to the present invention. Fig. 2 shows the control point 11, the source QoS device 14, the QoS manager 12, the intermediate QoS device 15, and the sink QoS device 16.

At first, the QoS manager 12 subscribes to events of the QoS devices 14 to 16, by sending event subscription messages 200, 202, 204 to the QoS devices 14 to 16. The QoS devices 14 to 16 acknowledge said event subscriptions by replying to the QoS manager 12 with acknowledge messages 201, 203, 205. Also, the control point 11 subscribes to events of the QoS manager 12 by sending an event subscription message 206 to the QoS manager 12. The QoS manager 12 acknowledges the event subscription received from the control point 11 by sending an acknowledge message 207 back to the control point 11.

Triggered by a change 208 to the network 1, e.g., a PC added to the network 1, each of the QoS devices 14 to 16, which notice said change, sends an event message 209 to 211 to the QoS manager 12. After reception of these event messages 209 to 211, the QoS manager 12 re-calculates 212 the topology of the network 1. The QoS manager 12 checks whether the flow managed by the QoS manager 12 is affected by the changed topology. If the current flow managed by the QoS manager 12 is not affected by the topology change, the QoS manager 12 will take no action.

Let us assume that another event 213 happens, e.g., a link is removed from the intermediate QoS device 15 acting as a routing gateway. Then again, the QoS devices 14 to 16 send event messages 214 to 216 to the QoS manager 12. After reception of these event messages 214 to 216, the QoS manager 12 re-calculates 217 the topology of the network 1. Let us assume that the latest change 213 of the network topology does affect the current flow managed by the QoS manager 12.

Then, the QoS manager 12 can react in different ways. It is possible that the QoS manager 12 itself takes action, without client interaction. For example, if there was a backup path, the flow could be routed via the backup path and the removed link could be avoided this way, However, if there is no such backup path, the QoS manager 12 will sent an event message 218 to the control point, and the control point 11 may notify the user.

Other actions the QoS manager 12 may execute is , e.g., in the case of bandwidth changes, that the QoS manager 12 re-applies connection admission control functions, in order to adapt all flows to the new bandwidth situation. We remember that an application that wishes to use the network 1 to transport , traffic with QoS must first request a connection, which involves informing the network 1 about the characteristics of the traffic and the QoS required by the application. This information in stored in a traffic contract. The network 1 judges whether it has enough resources available to accept the connection, and then either accepts or rejects the connection request. This is known as Connection Admission Control (= CAC).

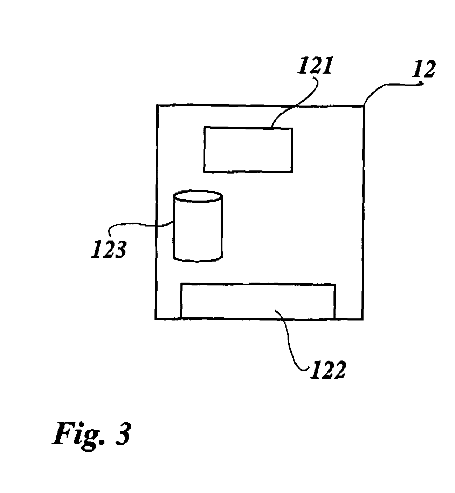

Fig. 3 shows an exemplary embodiment of a QoS manager 12. The QoS manager 12 is composed of one or several interlinked computers, i.e., a hardware platform, a software platform basing on the hardware platform and several application programs executed by the system platform formed by the software and hardware platform. The functionalities of the QoS manager 12 are provided by the execution of these application programs. The application programs or a selected part of these application programs constitute a computer software product providing a QoS manager service as described above, when executed on the system platform. Further, such computer software product is constituted by a storage medium storing these application programs or said selected part of application programs.

The QoS manager 12 comprises a processor 121, an interface 122 and a memory 123. The processor 121 does all the computational functions of the QoS manager 12, e.g., calculating the topology of the network. The interface 122 serves as an input/output unit for communication with other network entities, e.g., the control point 11 or the QoS policy holder 13. The memory 123 may be a storage device for storing data associated with the network, the traffic policy, and other relevant data, such as topology information of the network; requested bandwidth information associated with the flow, or a current status of the flow in a local state variable. Furthermore, the memory 123 stores software code representing computer programs needed by the processor 121 for the processing steps.

## Claims

1. A method of providing QoS for a flow associated with a client application in a network (1) comprising a QoS manager (12), a QoS policy holder (13), one or more QoS devices (14, 15, 16), and a control point (11) associated with the client application, wherein the network (1) supports a Universal Plug and Play QoS service, whereby the method comprises the steps of:
calculating, by the QoS manager (12), a topology of the network (1) on flow setup and requesting, by the QoS manager (12), traffic policy data from the QoS policy holder (13);
submitting, by the QoS manager (12), traffic descriptor data based on said traffic policy data to the one or more QoS devices (14, 15, 16) for configurating said QoS devices (14, 15, 16) for handling the flow; subscribing by the QoS manager (12) to events of the one or more QoS devices (14, 15, 16);
subscribing by the control point (11) to events of the QoS manager (12); on detection of a QoS device event by the QoS manager (12), recalculating the topology of the network (1) by the QoS manager (12) for determining a topology change;
checking, by the QoS manager (12), whether the topology change affects the flow;
if the flow is affected by the topology change, triggering suitable measures by the QoS manager (12).

2. The method of claim 1,
**characterized in**
**that** the method comprises the further step of:
if the flow is affected by the topology change, generating by the QoS manager (12) an event to the control point (11).

3. The method of claim 1,
**characterized in**
**that** the method comprises the further step of:
if the flow is affected by the topology change, taking action by the QoS manager (12) without client interaction.

4. The method of claim 1,
**characterized in**
**that** the method comprises the further steps of:
if the flow is affected by the topology change, choosing, by the QoS. manager (12), traffic descriptor data from a multitude of traffic descriptor data specified by the control point (11) wherein said traffic descriptor data is chosen to adapt said flow to the topology change; and
re-submitting, by the QoS manager (12), the chosen traffic descriptor data to the affected QoS devices (14, 15, 16) for re-configurating said QoS devices (14, 15, 16) to adapt their flow handling to the topology change.

5. The method of claim 1 or 4,
**characterized in**
**that** the method comprises the further step of:
if the flow is affected by the topology change, changing by the QoS manager (12) the priority assigned to the flow.

6. The method of claim 1, 2, 3, or 5,
**characterized in**
**that** the method comprises the further step of:
if the flow is affected by the topology change, providing by the QoS manager (12) the client application with a copy of a state variable comprising information about the network (1) and/or the flow.

7. The method of any of claim 1 to 4,
**characterized in**
**that** the method comprises the further step of:
if the flow is affected by bandwidth changes associated with the topology change, re-applying by the QoS manager (12) connection admission control functions; and
adapting by the QoS manager (12) the flow to the new bandwidth situation in the network (1).

8. The method of any of claim 1 to 4,
**characterized in**
**that** the method comprises the further step of:
if the flow is affected by reduced bandwidth associated with the topology change, checking by the QoS manager (12) whether the QoS subscribed for the flow can be maintained;
if the QoS subscribed for the flow cannot be maintained, releasing the flow by the QoS manager (12); and
sending, by the QoS manager (12), an event with a copy of a state variable comprising information about the network (1) and/or the new status of the flow to the control point (11).

9. A QoS manager (12) supporting the provision of QoS for a flow associated with a client application in a network (1) comprising the QoS manager (12), a QoS policy holder (13), one or more QoS devices (14, 15, 16), and a control point (11) associated with the client application, wherein the network supports a Universal Plug and Play QoS service, whereby the QoS manager (12) is adapted to calculate a topology of the network (1) on flow setup and request traffic policy data from the QoS policy holder (13);
submit traffic descriptor data based on said traffic policy data to the one or more QoS devices (14, 15, 16) for configurating said QoS devices (14, 15, 16) for handling the flow;
subscribe to events of the one or more QoS devices (14, 15, 16); receive a subscription to events of the QoS manager (12) from the control point (11);
on detection of a QoS device event, re-calculate the topology of the network (1) for determining a topology change;
checking whether the topology change affects the flow;
if the flow is affected by the topology change, indicating the event to the control point (11).

10. The QoS manager of claim 9,
**characterized in**
**that** the QoS manager (12) is a stateful entity which keeps topology information of the network (1) and/or requested bandwidth information associated with the flow and/or a current status of the flow in a local state variable.
